# EUROPÄISCHE PATENTSCHRIFT

(11) **EP 2 210 714 B1**
(45) Veröffentlichungstag und Bekanntmachung des Hinweises auf die Patenterteilung: **04.04.2012**
(21) Anmeldenummer: 09015256.2
(22) Anmeldetag: 09.12.2009
(51) Int. Cl.: B25J 9/10, F16H 1/46, B25J 17/02

(54) **Manipulator mit einem Außenläufermotor**
Manipulator with an external rotor motor
Manipulateur doté d'un moteur à rotor extérieur

(30) Priorität: 21.01.2009 DE 102009005496
(43) Veröffentlichungstag der Anmeldung: 28.07.2010
(73) Patentinhaber: KUKA Roboter GmbH, 86165 Augsburg (DE)
(72) Erfinder: Kos, Daniel, 86508 Rehling (DE); Weingärtner, Andreas, 76307 Karlsbad (DE); Nitz, Gernot, Dr., 86163 Augsburg (DE)
(74) Vertreter: Schlotter, Alexander Carolus Paul

(56) Entgegenhaltungen:
- JP-A- 9 098 450
- US-A- 2 591 967
- US-A1- 2003 220 169

## Beschreibung

Die vorliegende Erfindung betrifft einen Manipulator gemäß dem Oberbegriff des Anspruchs 1.

Ein solcher Manipulator ist aus der US 2003/0220169 A1 bekannt.

Manipulatoren weisen in der Regel mehrere paarweise gegeneinander bewegliche Glieder auf, die in Gelenken miteinander verbunden sind, um die Bewegungsachsen des Manipulators darzustellen. So weist ein typischer sechsachsiger Knickarmroboter ein Grundgestell, ein gegen dieses um eine vertikale Drehachse drehbares Karussell, ein daran um eine horizontale Drehachse bewegliche Schwinge und eine daran um eine hierzu parallele Drehachse angelenkte Arm-Hand-Einheit mit drei paarweise orthogonalen Drehachsen auf.

Zur Bewegung der einzelnen Glieder gegeneinander wirken Achsantriebe auf die einzelnen Bewegungsachsen, die allgemein einen Elektromotor, einen Positionsgeber zur Regelung des Antriebs und ein Getriebe zur Untersetzung der Abtriebsdrehzahl des Elektromotors auf die Drehzahl der Bewegungsachse aufweisen.

Aus der US 2003/0220169 A1 ist ein Achsantrieb für Roboter mit einem Motor und einem Getriebe bekannt, wobei das Getriebe mehrere Planetenstufen mit einem Sonnenritzel und je drei damit kämmenden Planeten aufweist, welche in ein Hohlrad eingreifen und auf einem Planetenträger gelagert sind, wobei ein oberer Roboterarm mit dem Hohlrad drehfest verbunden und durch dieses radial und axial gelagert ist, und ein unterer Roboterarm mit dem Planetenträger drehfest verbunden und durch diesen radial und axial gelagert ist.

Aus der DE 100 30 129 A1 ist ein Leichtbauroboter mit einem Außenläufermotor, einem Hall-Sensor als Positionsgeber und einem Harmonic-Drive-Getriebe bekannt, dessen Wave-Generator mit dem Läufer des Elektromotors verbunden ist, um Gewicht und Abmessungen zu reduzieren. Die Roboterglieder sind gegeneinander unabhängig von dem Achsantrieb gelagert, um auch bei ausgebautem Achsantrieb die Roboterkinematik aufrechtzuerhalten.

Nachteilig sind solche Harmonic-Drive-Getriebe technisch komplexe Kleinserien, was ebenso wie die auch bei anderen heutigen Robotern allgemein übliche separate Lagerung der Roboterglieder gegeneinander und der damit verbundenen Baugröße insbesondere dem Einsatz in kleinen, leichten und kostengünstigen Manipulatoren, beispielsweise für Schulen und Universitäten, entgegensteht.

Aufgabe der vorliegenden Erfindung ist es, einen verbesserten Manipulator zur Verfügung zu stellen.

Zur Lösung dieser Aufgabe ist ein Manipulator nach dem Oberbegriff des Anspruchs 1 durch dessen kennzeichnende Merkmale weitergebildet. Die Unteransprüche betreffen vorteilhafte Ausführungen.

Ein erfindungsgemäßer Manipulator, bei dem es sich insbesondere um einen Kleinroboter, beispielsweise zur Verwendung zu Lehrzwecken, handeln kann, weist zwei oder mehr Glieder auf, die paarweise in Gelenken verbunden und motorisch gegeneinander beweglich sind. Vorzugsweise sind, ausgehend von einer kinematischen Wurzel, wenigstens sechs solcher Glieder vorgesehen, um alle räumlichen Freiheitsgrade zu realisieren.

Auf die Bewegungsachsen der Gelenke wirken Achsantriebe, wobei ein oder mehrere, vorzugsweise alle Achsantriebe je einen Außenläufermotor, einen Positionsgeber und ein Getriebe mit wenigstens einer Planetenstufe mit einem Sonnenritzel und einem oder mehreren damit kämmenden Planeten aufweisen, die in ein Hohlrad eingreifen und auf einem Planetenträger gelagert sind. Das eine von den beiden paarweise in dem jeweiligen Gelenk verbundenen Gliedern des Manipulators, vorzugsweise das kinematisch wurzelnähere, beispielsweise ein Karussel oder eine Schwinge, ist mit dem Hohlrad drehfest verbunden und durch dieses radial und/oder axial gelagert, das andere der beiden Glieder des Manipulators, vorzugsweise das kinematisch wurzelfernere und somit Arbeitspunkt- bzw. TCP-nähere, beispielsweise eine Schwinge oder ein Arm, ist mit dem Planetenträger drehfest verbunden und durch diesen radial und/oder axial gelagert.

Aufgrund der Lagerung der Manipulatorglieder durch, insbesondere auf Hohlrad bzw. Planetenträger des Getriebes können zusätzliche separate Lagerungen der Manipulatorglieder gegeneinander ebenso wie eine separate Abtriebsachse des Getriebes und deren Lagerung vorteilhaft entfallen. Zur Lagerung und drehfesten Verbindung können Manipulatorglieder mit den entsprechenden Elementen der Planetenstufe, i.e. dem Hohlrad bzw. Planetenträger, lösbar, beispielsweise form - und/oder kraftschlüssig, etwa durch Schraubverbindungen, Steckverbindungen oder dergleichen, verbunden sein. Gleichermaßen können Manipulatorglieder mit Elementen der Planetenstufe auch unlösbar verbunden, beispielsweise verschweißt, verlötet oder verklebt, oder integral mit diesen ausgebildet sein.

Durch den Einsatz eines ein- oder mehrstufigen Planetengetriebenes können in einer bevorzugten Ausführung großteils Standard-Komponenten eingesetzt werden, insbesondere, wenn in einer vorteilhaften Ausführung zwei oder mehr Planetenstufen baulich gleiche Komponenten, beispielsweise Planetenräder, Stege, Planetenträger und/oder Sonnenritzel aufweisen. Zudem baut ein Planetengetriebe vorteilhafterweise axial und radial verhältnismäßig klein, so dass ein kompakter Achsantrieb zur Verfügung steht. Durch die Lagerung der Manipulatorglieder direkt durch die entsprechenden Elementen der Planetenstufe selber wird vorteilhaft eine weitere Gewichts- und Bauraumreduzierung ermöglicht. Vorzugsweise kann auch das Getriebespiel durch das Planetengetriebe reduziert werden.

In einer bevorzugten Ausführung ist der Planetenträger ein- oder mehrteilig als Abtriebstopf mit einer Mantelfläche, einer im Wesentlichen offenen und einer im Wesentlichen geschlossenen Stirnseite ausgebildet und auf dem Hohlrad drehbar gelagert. Als Hohlrad wird vorliegend insbesondere ein Bauteil bezeichnet, welches eine Innenverzahnung aufweist, mit der die Planeten der Planetenstufe kämmen. Dieses Bauteil kann ein- oder mehrteilig ausgebildet sein. Insbesondere kann es neben einer innenverzahnten Hohlwelle beispielsweise einen Stützring zur Lagerung des einen Manipulatorgliedes und/oder eine drehende Rotorglocke des Außenläufermotors aufweisen, wobei die innenverzahnte Hohlwelle lösbar oder unlösbar mit dem Stützring und/oder der Rotorglocke verbunden, insbesondere integral damit ausgebildet sein kann.

Zur radialen Lagerung des einen an dem anderen Manipulatorglied sind in einer bevorzugten Ausführung zwischen dem Planetenträger und dem Hohlrad ein oder mehrere Wälzlager, insbesondere Dünnringkugellager angeordnet. Zwei Lager können in X- oder O-Anordnung angeordnet sein, um insbesondere eine hohe Kippsteifigkeit zu erzielen. Durch wenigstens ein Festlager kann in einer bevorzugten Ausführung eine axialer Lagerung des einen an dem anderen Manipulatorglied realisiert werden.

Erfindungsgemäß übergreift der Abtriebstopf das Getriebe, insbesondere dessen Planetenstufen, im Wesentlichen auf dessen halber Länge. Hierdurch kann das mit dem Abtriebstopf verbundene Manipulatorglied platzsparend und gleichzeitig steif gelagert werden. In entsprechender Weise kann zusätzlich ein radial außenliegender Stützring des Hohlrades das Getriebe, insbesondere dessen Planetenstufen, vorzugsweise im Wesentlichen auf dessen halber Länge, übergreifen, um das mit dem Hohlrad, insbesondere dem Stützring verbundene Manipulatorglied platzsparend und gleichzeitig steif zu lagern. Übergreifen in bevorzugter Weiterbildung sowohl Abtriebstopf als auch Stützring das Getriebe im Wesentlichen je zur Hälfte, kann das Getriebe geschützt und zugleich eine minimale axiale Baulänge ermöglicht werden. Dabei kann das Verhältnis der axial übergriffenen Längen variieren: beispielsweise kann bei einem dünneren abtriebsseitigen Manipulatorglied der Abtriebstopf schmaler ausgebildet sein und entsprechend weniger von dem Getriebe übergreifen.

Insbesondere, um entsprechend große Übersetzungen ins Langsame zu realisieren, weist das Getriebe in einer bevorzugten Ausführung zwei oder mehr Planetenstufen auf. Um diese raumsparend auszubilden, greifen in einer vorteilhaften Ausführung die Planeten wenigstens zweier, bevorzugt aller Planetenstufen, in ein gemeinsames Hohlrad ein.

Insbesondere, um eine separate Abtriebsachse des Außenläufermotors zu ersetzen, kann ein von einer drehenden Rotorglocke des Außenläufermotors umschlossener Stator drehfest mit einem Sonnenritzel einer Planetenstufe lösbar oder unlösbar verbunden, insbesondere integral mit diesem ausgebildet sein.

Um eine hohe Leistungsdichte und eine hohe Lebensdauer zu erzielen, wird der Außenläufermotor vorzugsweise elektronisch kommutiert. Insbesondere ein solcher elektronisch kommutierter Außenläufermotor kann als Flachmotor, vorzugsweise als Scheibenmotor ausgebildet sein, um einen kompakten Achsantrieb zu realisieren.

Wird in einer bevorzugten Ausführung der Positionsgeber auf einer dem Getriebe gegenüberliegender Stirnseite des Außenläufermotors angeordnet, ist er vorteilhaft für Signalleitungen zu einer Manipulatorsteuerung hin gut zugänglich. Zugleich kann ein Flansch des Positionsgebers den Außenläufermotor von dieser Stirnseite her wenigstens teilweise umschließen und so gegen Umwelteinflüsse kapseln. Der Positionsgeber kann beispielsweise einen Inkrementaldrehgeber und/oder einen Hall-Sensor aufweisen, wobei auch ein Geschwindigkeits- oder Beschleunigungssensor einen Positionsgeber im Sinne der vorliegenden Erfindung darstellt, da durch Integration die Gelenkstellung bzw. Gelenkstellungsänderung der Bewegungsachse ermittelbar ist. Der Positionsgeber kann vorteilhaft zugleich zur Regelung des Manipulators und zur elektronischen Kommutierung dienen.

Weitere Vorteile und Merkmale ergeben sich aus den Unteransprüchen und den Ausführungsbeispielen. Hierzu zeigt, teilweise schematisiert, die einzige:

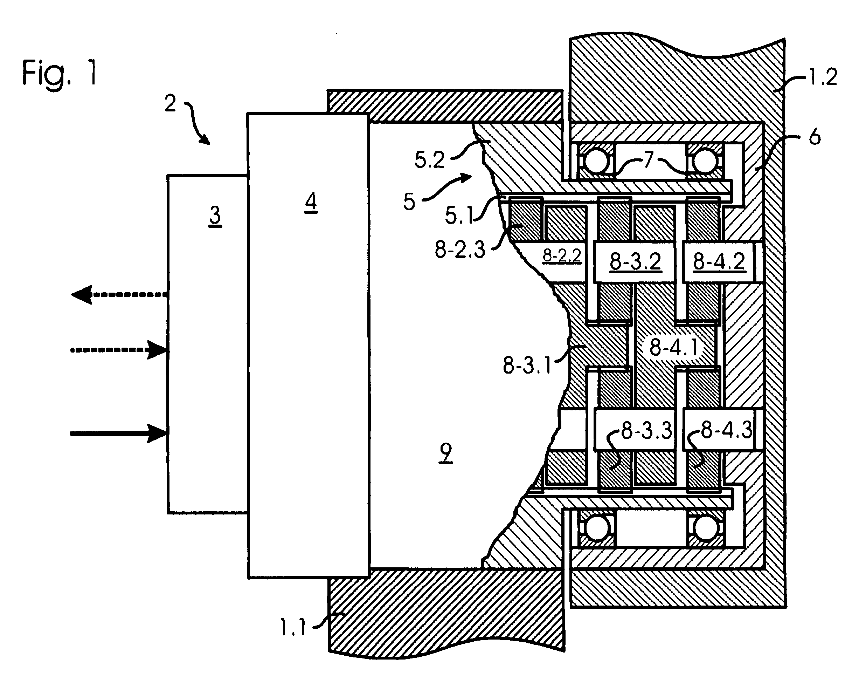

- Fig. 1:: einen Achsantrieb eines Manipulators nach einer Ausführung der vorliegenden Erfindung.

Fig. 1 zeigt im Teilschnitt längs seiner Bewegungsachse einen Achsantrieb 2 eines Kleinroboters nach einer Ausführung der vorliegenden Erfindung. Der Achsantrieb 2 bewegt eine Schwinge 1.2 des im Übrigen nicht dargestellten sechsachsigen Kleinroboters gegen sein Karussell 1.1, um eine erste horizontale Drehachse zu realisieren. Die Kinematik des Kleinroboters umfasst eine vorhergehende erste vertikale Drehachse des Karussells 1.1 gegen ein Grundgestell und eine sich anschließende zweite horizontale Drehachse einer Zentralhand gegen die Schwinge 1.2 auf, die ihrerseits drei weitere, paarweise orthogonale Drehachsen .aufweist. Insbesondere der Achsantrieb der zweiten horizontalen Drehachse zwischen Schwinge und Zentralhand kann in gleicher Weise realisiert sein wie der nachfolgend erläuterte Achsantrieb 2.

Der Achsantrieb 2 weist einen (in Fig. 1 nicht geschnittenen) Außenläuferflachmotor 4 auf. Zu dessen elektronischer Kommutierung und zur Steuerung des Roboters ist an der der Schwinge 1.2 abgewandten Stirnseite (links in Fig. 1) des Motors 4 ein Positionsgeber 3 angeordnet, so dass in Fig. 1 strichliert angedeutete Signalverbindungen mit einer (nicht dargestellten) Robotersteuerung ebenso wie eine in Fig. 1 durch einen ausgezogenen Pfeil angedeutete elektrische Energieversorgung des Motors 4 auf einer der Abtriebsseite des Motors 2 gegenüberliegenden Stirnseite nicht durch die Schwinge 1.2 beeinträchtigt werden. Der Positionsgeber 3 kann beispielsweise einen Inkrementaldrehgeber und/oder einen Hall-Sensor umfassen. Ein Flansch seines Gehäuses kapselt eine Stirnseite und den Außenumfang des Außenläuferflachmotors 4.

Auf der dem Positionsgeber 3 gegenüberliegenden Stirnseite ist ein vierstufiges Planetengetriebe 9 zur Untersetzung der Abtriebsdrehzahl des Außenläuferflachmotors 4 auf die Drehgeschwindigkeit der Schwinge 1.2 gegen das Karussell 1.1 angeordnet. Es umfasst vier hintereinandergeschaltete, baulich im Wesentlichen übereinstimmende Planetenstufen, wobei die im Teilschnitt der Fig. 1 erkennbaren hinteren Stufen durch die Indices "-2", "-3" bzw. "-4" unterschieden sind.

Die abtriebsseitige vierte Stufe "-4" umfasst vier Planeten 8-4.3, die auf Stegen 8-4.2 eines Planetenträgers 6 gelagert sind und mit einem Sonnenritzel 8-4.1 und einer Innenverzahnung 5.1 eines Hohlrades 5 kämmen. Das Sonnenritzel 8-4.1 bildet zugleich den Planetenträger für die vorhergehende dritte Planetenstufe. Hierzu sind deren vier Planeten 8-3.3 auf Stegen 8-3.2 des Sonnenritzels 8-4.1 drehbeweglich gelagert. Sie kämmen mit derselben Innenverzahnung 5.1 des Hohlrades 5 und einem Sonnenritzel 8-3.1, das seinerseits in analoger Weise den Planetenträger für die vorhergehende zweite Planetenstufe bildet und hierzu auf Stegen 8-2.2 deren vier Planeten 8-2.3 lagert, die ebenfalls mit derselben Innenverzahnung 5.1 des Hohlrades 5 und einem auf den Planetenträger der ersten Planetenstufe aufgeschnittenen Sonnenritzel kämmen. Die auf diesem Planetenträger gelagerten vier Planeten der im Teilschnitt der Fig. 1 nicht dargestellte erste Planetenstufe kämmen mit derselben Innenverzahnung 5.1 des Hohlrades 5 und einem auf den Stator des Außenläuferflachmotors 4 direkt aufgeschnittenen Sonnenritzel. Die vier Planetenstufen sind baulich im Wesentlichen gleich, insbesondere weisen alle Stufen die gleichen Planeten und Stege sowie die erste bis dritte Stufe die gleichen Planetenträger auf, was die Herstellung des Getriebes verbilligt. Alternativ sind jedoch auch, insbesondere zur Realisierung anderer Untersetzungsverhältnisse, unterschiedliche Planetenstufen mit unterschiedlichen Radien und Zähnezahlen denkbar.

Integral mit der Hohlwelle, die die Innenverzahnung 5.1 trägt, ist ein radial außenliegender Stützring 5.2 ausgebildet, der zusammen mit der Hohlwelle und einer mit ihm fest, beispielsweise durch Schrauben oder Schweißen, verbundenen Rotorglocke des Außenläuferflachmotors 4 das mehrteilige Hohlrad 5 bildet. Der Stützring 5.2 übergreift das Getriebe 9 im Wesentlichen auf halber axialer Länge (von links nach rechts in Fig. 1). Das Karussell 1.1 nimmt den Stützring 5.2 in einer Durchgangsbohrung auf und ist mit ihm drehfest, beispielsweise durch einen Presssitz, eine Schraub- oder Schweißverbindung verbunden, so dass es durch den Stützring 5.2 axial und radial gelagert ist.

Der Planetenträger 6 der vierten Stufe ist als Abtriebstopf oder -glocke ausgebildet und mittels in O-Anordnung gegeneinander angestellte Dünnringkugellager 7 auf dem Hohlrad 5 drehbar gelagert. Er übergreift hierzu das Getriebe 9 im Wesentlichen auf halber axialer Länge (von rechts nach links in Fig. 1). Somit ist das Planetengetriebe sehr kompakt und geschützt ausgebildet. Die Schwinge 1.2 nimmt den Abtriebstopf 6 in einer Aussparung formschlüssig auf ist mit ihm drehfest, beispielsweise durch einen Presssitz, eine Schraub- oder Schweißverbindung verbunden, so dass sie durch den Abtriebstopf 6 axial und radial gelagert ist.

Somit ergibt sich ein Achsantrieb, der insbesondere durch die Ausbildungen des letzten Planetenträgers als Abtriebskopf sehr kompakt, durch die Kapselung von Motor 4 und Getriebe 9 durch den Flansch des Positionsgebers 3 bzw. Stützring 5.2 und Abtriebstopf 6 robust, und durch die Verwendung gleicher Bauteile in den verschiedenen Planetenstufen kostengünstig herstellbar ist. Durch die Lagerung der beiden Manipulatorglieder 1.1, 1.2 direkt auf dem Stützring 5.2 bzw. dem Abtriebstopf 6 können zusätzliche separate Lagerungen entfallen und eine in axialer Richtung schlanke Kontur des Gelenkes bei niedrigem Systemgewicht realisiert werden. Die Dünnringkugellager 7 ermöglichen eine kippsteife Lagerung des Abtriebstopfes 6 auf dem Hohlrad 5 und damit der Schwinge 1.2 durch das Karussell 1.1.

### Bezugszeichenliste

- 1.1: Karussell (Manipulatorglied)
- 1.2: Schwinge (Manipulatorglied)
- 2: Achsantrieb
- 3: Positionsgeber
- 4: elektronisch kommutierter Außenläuferflachmotor
- 5: Hohlrad
- 5.1: Innenverzahnung
- 5.2: Stützring
- 6: Abtriebstopf (Planetenträger)
- 7: Dünnringkugellager
- 8-i.1: Sonnenritzel der i. Planetenstufe
- 8-i.2: Steg der i. Planetenstufe
- 8-i.3: Planet der i. Planetenstufe
- 9: Planetengetriebe

## Patentansprüche

1. Manipulator, insbesondere Kleinroboter, mit wenigstens zwei motorisch gegeneinander beweglichen Gliedern (1.1, 1.2) und einem auf eine Bewegungsachse der beiden Glieder wirkenden Achsantrieb (2) mit einem Getriebe (9),
das wenigstens eine Planetenstufe mit einem Sonnenritzel (8-3.1) und wenigstens einen damit kämmenden Planeten (8-3.3) aufweist, welcher in ein Hohlrad (5) eingreift und auf einem Planetenträger (6) gelagert ist, wobei das eine (1.1) von den beiden Gliedern des Manipulators mit dem Hohlrad (5) drehfest verbunden und durch dieses radial und/oder axial gelagert ist, und das andere (1.2) von den beiden Gliedern des Manipulators mit dem Planetenträger (6) drehfest verbunden und durch diesen radial und/oder axial gelagert ist,
wobei der Planetenträger als Abtriebstopf (6) ausgebildet und auf dem Hohlrad drehbar gelagert ist,
**dadurch gekennzeichnet, dass**
der Achsantrieb (2) einen Außenläufermotor (4) und einen Positionsgeber (3) aufweist, und dass der Abtriebstopf (6) das Getriebe (9) im Wesentlichen auf dessen halber Länge übergreift.

2. Manipulator nach Anspruch 1, **dadurch gekennzeichnet, dass** zwischen dem Planetenträger (6) und dem Hohlrad (5) wenigstens ein Wälzlager, insbesondere ein Dünnringkugellager (7) angeordnet ist.

3. Manipulator nach einem der vorhergehenden Ansprüche, **dadurch gekennzeichnet, dass** das Getriebe mehrere Planetenstufen aufweist, deren Planeten (8-2.3, 8-3.3, 8-4.3) in ein gemeinsames Hohlrad (5) eingreifen.

4. Manipulator nach einem der vorhergehenden Ansprüche, **dadurch gekennzeichnet, dass** ein von einer drehenden Rotorglocke (5) des Außenläufermotors umschlossener Stator drehfest mit einem Sonnenritzel einer Planetenstufe verbunden, insbesondere integral mit diesem ausgebildet ist.

5. Manipulator nach einem der vorhergehenden Ansprüche, **dadurch gekennzeichnet, dass** das Hohlrad (5) eine drehende Rotorglocke des Außenläufermotors (4) aufweist.

6. Manipulator nach einem der vorhergehenden Ansprüche, **dadurch gekennzeichnet, dass** ein radial außenliegender Stützring (5.2) des Hohlrades (5) das Getriebe (9), insbesondere im Wesentlichen auf dessen halber Länge, übergreift.

7. Manipulator nach einem der vorhergehenden Ansprüche, **dadurch gekennzeichnet, dass** der Außenläufermotor (4) elektronisch kommutiert ist

8. Manipulator nach einem der vorhergehenden Ansprüche, **dadurch gekennzeichnet, dass** der Außenläufermotor (4) als Flachmotor, insbesondere als Scheibenmotor ausgebildet ist.

9. Manipulator nach einem der vorhergehenden Ansprüche, **dadurch gekennzeichnet, dass** der Positionsgeber (3) auf einer dem Getriebe (9) gegenüberliegender Stirnseite des Außenläufermotors (4) angeordnet ist.

10. Manipulator nach einem der vorhergehenden Ansprüche, **dadurch gekennzeichnet, dass** ein Flansch des Positionsgebers (3) den Außenläufermotor (4) wenigstens teilweise umschließt.

11. Manipulator nach einem der vorhergehenden Ansprüche, **dadurch gekennzeichnet, dass** der Positionsgeber (3) einen Inkrementaldrehgeber und/oder einen Hall-Sensor aufweist.

## Claims

1. Manipulator, particularly small robot, with at least two motor-operated elements (1.1, 1.2) which are movable against each other and an axis actuator (2), which affects one motion axes of both elements, with a gearing (9) that has at least one planetary gear with a sun gear (8-3.1) and at least one planet (8-3.3) meshing with the sun gear, which meshes with a hollow wheel (5) and which is supported on a planet carrier (6), wherein one (1.1) of both elements of the manipulator is connected to rotate with the hollow wheel (5) by which it is radially and/or axially supported, and the other one (1.2) of both elements of the manipulator is connected to rotate with the planet carrier (6) by which it is radially and/or axially supported, wherein the planet carrier is designed as an output pot (6) and supported rotatable on the hollow wheel, **characterized in that**
the axis actuator (2) has an external rotor motor (4) and a position sensor (3) and that the output pot (6) is spread across the gearing (9) essentially over half of its length.

2. Manipulator according to claim 1, **characterized in that** between the planetary carrier (6) and the hollow wheel (5) at least one roller bearing, particularly a thin section roller bearing (7), is arranged.

3. Manipulator according to one of the preceding claims, **characterized in that** the gearing has a plurality of planetary gears having planets (8-2.3, 8-3.3, 8-4.3) which mesh in a common hollow wheel (5).

4. Manipulator according to one of the preceding claims, **characterized in that** a stator which is encapsulated by a rotating rotor housing (5) of the external rotor motor is connected to rotate with a sun gear of the planetary gear, particularly designed integrally with the sun gear.

5. Manipulator according to one of the preceding claims, **characterized in that** the hollow wheel (5) has a rotating rotor housing of the external rotor motor (4).

6. Manipulator according to one of the preceding claims, **characterized in that** a radially, externally mounted supporting ring (5.2) of the hollow wheel (5) is spread across the gearing (9), particularly essentially over half of its length.

7. Manipulator according to one of the preceding claims, **characterized in that** the external rotor motor (4) is commutated electronically.

8. Manipulator according to one of the preceding claims, **characterized in that** the external rotor motor (4) is designed as a flat motor, particularly as a pancake motor.

9. Manipulator according to one of the preceding claims, **characterized in that** the position sensor (3) is arranged on a face side of the external rotor motor (4) which is opposed to the gearing (9).

10. Manipulator according to one of the preceding claims, **characterized in that** a flange of the position sensor (3) at least partially encloses the external rotor motor (4).

11. Manipulator according to one of the preceding claims, **characterized in that** the position sensor (3) has an incremental rotational encoder and/or a Hall-Sensor.

## Revendications

1. Manipulateur, en particulier petit robot, comprenant au moins deux membres (1.1, 1.2) qui se déplacent l'un par rapport à l'autre au moyen de moteurs, et un entraînement d'axe (2) agissant sur un axe de mouvement des deux membres et comprenant un mécanisme (9) qui comporte au moins un étage planétaire comprenant une roue planétaire (8-3.1) et au moins un satellite (8-3.3) engrenant avec cette roue et qui engrène avec une couronne (5) et est monté rotatif sur un porte-satellites (6), dans lequel l'un (1.1) des deux membres du manipulateur est relié solidairement en rotation à la couronne (5) et est supporté radialement et/ou axialement par cette dernière, et l'autre (1.2) des deux membres du manipulateur est relié solidairement en rotation au porte-satellites (6) et supporté radialement et/ou axialement par celui-ci,
le porte-satellites étant constitué par un godet de sortie (6) et étant monté rotatif sur la couronne,
**caractérisé en ce que** l'entraînement d'axe (2) présente un moteur à rotor extérieur (4) et un transmetteur de position (3) et **en ce que** le godet de sortie (6) recouvre le mécanisme (9) sensiblement sur la moitié de sa longueur.

2. Manipulateur selon la revendication 1, **caractérisé en ce qu'**au moins un roulement, en particulier un roulement à billes à bague mince (7) est disposé entre le porte-satellites (6) et la couronne (5).

3. Manipulateur selon une des revendications précédentes, **caractérisé en ce que** le mécanisme présente plusieurs étages planétaires dont les satellites (8-2.3, 8-3.3, 8-4.3) engrènent avec une couronne commune (5).

4. Manipulateur selon l'une des revendications précédentes, **caractérisé en ce qu'**un stator entouré par une cloche de rotor rotative (5) du moteur à rotor extérieur est relié solidairement en rotation à un pignon planétaire d'un étage planétaire, et est en particulier intégré à ce dernier.

5. Manipulateur selon l'une des revendications précédentes, **caractérisé en ce que** la couronne (5) présente une cloche de rotor rotative du moteur à rotor extérieur (4).

6. Manipulateur selon l'une des revendications précédentes, **caractérisé en ce qu'**une bague d'appui (5.2) de la couronne (5) qui est en position radialement extérieure recouvre le mécanisme (9), en particulier sensiblement sur la moitié de sa longueur.

7. Manipulateur selon l'une des revendications précédentes, **caractérisé en ce que** le moteur à rotor extérieur (4) est à commutation électronique.

8. Manipulateur selon l'une des revendications précédentes, **caractérisé en ce que** le moteur à rotor extérieur (4) est constitué par un moteur plat, en particulier par un moteur disque.

9. Manipulateur selon l'une des revendications précédentes, **caractérisé en ce que** le transmetteur de position (3) est disposé sur un côté frontal du moteur à rotor extérieur (4) qui est à l'opposé du mécanisme (9).

10. Manipulateur selon l'une des revendications précédentes, **caractérisé en ce qu'**un flasque du transmetteur de position (3) entoure au moins partiellement le moteur à rotor extérieur (4).

11. Manipulateur selon une des revendications précédentes, **caractérisé en ce que** le transmetteur de position (3) présente un résolveur de rotation incrémental et/ou un détecteur à effet Hall.
